# EUROPÄISCHE PATENTANMELDUNG

(11) **EP 0 645 279 A1**
(43) Veröffentlichungstag der Anmeldung: **29.03.1995**
(21) Anmeldenummer: 94114901.5
(22) Anmeldetag: 22.09.1994
(51) Int. Cl.: B60P 3/025

(54) **Mobile Bühne**

(30) Priorität: 24.09.1993 DE 9314476 U
(71) Anmelder: MOBÜ-Trailer Verkauf und Vermietung mobiler Bühnen GmbH, D-66773 Schwalbach (DE)
(72) Erfinder: Orthaus, Dieter, D-66773 Schwalbach (DE)
(74) Vertreter: Bernhardt, Winfrid, Dr.-Ing.

(57) **Zusammenfassung**

Die mobile Bühne ist gekennzeichnet durch eine fahrbare, rechteckige Plattform mit an gegenüberliegenden Seitenrändern angelenkten, aus einer hochgeschwenkten, zusammengeklappten Stellung in eine waagerechte, ausgebreitete Stellung schwenkbaren Knickflügeln (7) und Stützen jeweils für das innere (9) und für das äußere (10) Flügelteil.

Zum Ausbreiten und Zusammenklappen der Knickflügel greifen an dem Grundrahmen unter der Plattformebene angelenkte Stangen (18) gelenkig an dem äußeren Flügelteil an, deren Länge und Befestigungspunkte derart gewählt sind, daß das äußere Flügelteil (10) bei der hochgeschwenkten Stellung des Knickflügels (7) an dem inneren Flügelteil anliegt und bei der ausgebreiteten Stellung mit ihm fluchtet.

An den beiden anderen Seiten der Plattform sind zwei einfahrbare, in Scherenkonstruktion ausgeführte, Stützen angeordnet, die einen Balken aus Fachwerk tragen, an dem eine Dachkonstruktion angeordnet ist mit zwei Knickflügeln (33), die aus einer herabgeschwenkten, zusammengeklappten Stellung in eine ausgebreitete Stellung verschwenkbar sind und mit Stützen jeweils für das innere und das äußere Flügelteil versehen sind.

## Beschreibung

Die Erfindung betrifft eine mobile Bühne.

Es liegt ihr die Aufgabe zugrunde, eine möglichst große mobile Bühne zu schaffen, die trotzdem einfach und schnell aufgestellt werden kann.

Gemäß der Erfindung wird dieser Zweck erfüllt durch eine fahrbare, rechteckige Plattform mit an gegenüberliegenden Seitenrändern angelenkten, aus einer hochgeschwenkten, zusammengeklappten Stellung in eine waagerechte, ausgebreitete Stellung schwenkbaren Knickflügeln und Stützen jeweils für das innere und für das äußere Flügelteil.

Weitere Maßnahmen, die zur vorteilhaften Ausgestaltung der Erfindung dienen können, sind in der folgenden Beschreibung eines Ausführungsbeispieles angeführt.

Die Zeichnungen geben das Ausführungsbeispiel wieder.
- Fig. 1: zeigt einen senkrechten Querschnitt durch eine mobile Bühne im Transport- und Ruhezustand,
- Fig. 2: zeigt die linke Hälfte des Schnittes gemäß Fig. 1 in leicht vergrößertem Maßstab in verschiedenen Stellungen bis zum aufgebauten Zustand,
- Fig. 3: zeigt den aufgebauten Zustand entsprechend Fig. 2 wiederum in etwas größerem Maßstab,
- Fig. 4: zeigt die gesamte Bühne in einer Darstellung entsprechend Fig. 2 in kleinerem Maßstab,
- Fig. 5: zeigt die gesamte Bühne in einer Darstellung entsprechend Fig. 3 in etwas kleinerem Maßstab,
- Fig. 6: zeigt die Bühne in einem Längsschnitt,
- Fig. 7: zeigt in einer Darstellung entsprechend Fig. 6, rechte Seite eine Abwandlung im Transport- und Ruhezustand der Bühne und
- Fig. 8: zeigt die Abwandlung entsprechend Fig. 6, linke Seite im aufgebauten Zustand der Bühne.

Ein gebräuchlicher Sattelaufleger von z.B. 13,60 m Länge hat folgenden Auf- und Ausbau erhalten:

In das Fahrgestell 1 des Sattelauflegers sind in Querrichtung sich erstreckende Teleskopführungen 2 mit vier oder mehr nach der Seite ausziehbaren hydraulischen Stützen 3 eingebaut worden, mittels derer die Plattform 4 des Sattelauflegers auf eine Höhe von z.B. 2 m angehoben werden kann. Dazu wird unter den Stützen 3 ein diesen eine Kugelpfanne 5 als gelenkiges Auflager bietender Block 6 aufgestellt.

An den beiden Längsseiten der Plattform 4 sind an dem üblicherweise an der Plattform umlaufenden, in der Zeichnung nicht erscheinenden Rahmen zwei Knickflügel 7 bei 8 umgelenkt. Das innere Teil des Knickflügels ist mit 9, das äußere mit 10 bezeichnet. Die beiden Teile sind durch Gelenke 11 verbunden. Sie bestehen jeweils aus einer die Plattform 4 fortsetzenden Platte 12 mit Versteifungsrippen 13 an ihrer Unterseite.

An einem das Fahrgestell 1 ergänzenden Rahmenteil sind Arbeits-Zylinder 14 bei 15 angelenkt, deren Kolbenstangen in Gelenken 16 an dem inneren Flügelteil 9 angreifen. Ferner an diesem Rahmenteil bei 17 angelenkte Stangen 18 sind in Gelenken 19 mit dem äußeren Flügelteil 10 verbunden.

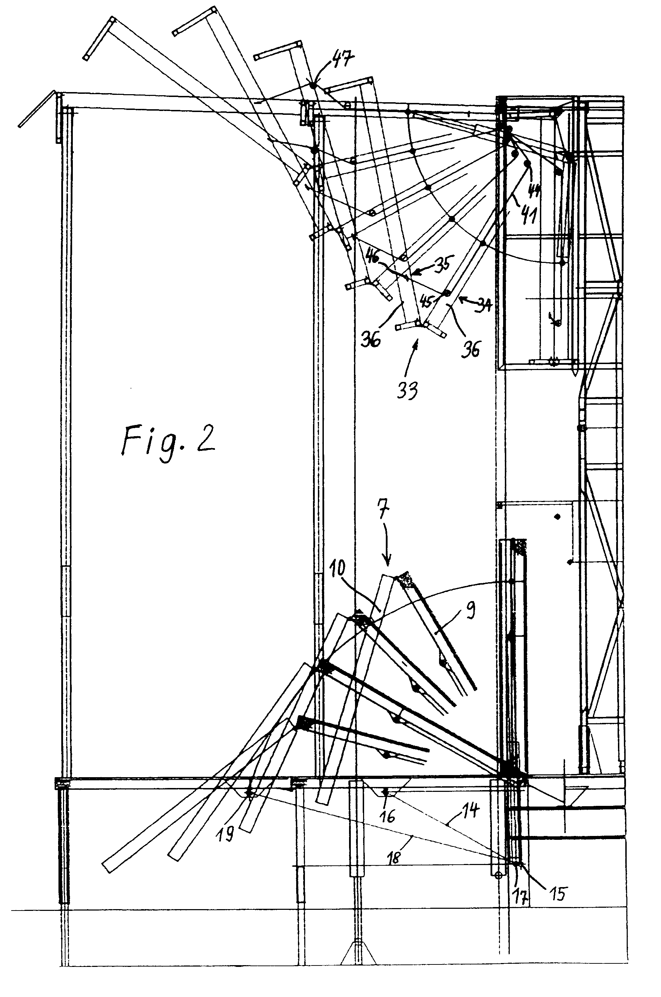

Wie insbesondere Fig. 2 erkennen läßt, ist die Länge und sind die Befestigungspunkte der Stangen 18 derart gewählt, daß das äußere Flügelteil 10 bei der hochgeschwenkten Stellung des Knickflügels 7 an dem inneren Flügelteil 9 anliegt und bei der ausgebreiteten Stellung mit ihm fluchtet.

An beiden Flügelteilen 9 und 10 sind jeweils nahe ihrem Außenrand Stützen 20 und 21 angelenkt, die teleskopisch ausziehbar und in ihrer Länge von Hand fixierbar sind. Die Stützen 20 und 21 finden in der zusammengeklappten Stellung der Knickflügel 7 Platz in den Zwischenräumen der Versteifungsrippen 13 wie übrigens auch die zwischen die zusammengeklappten Flügelteile ragenden Abschnitte der Zylinder 14 und Stangen 18. Die Stützen 21 sind in Abstand von ihrem Gelenk an dem äußeren Flügelteil 10 gehalten und werden von Hand aus der Halterung gelöst und aufgestellt.

Die Stützen 20 hängen einfach frei und stellen sich damit selbst auf und legen sich beim Hochschwenken des Knickflügels selbst an das Flügelteil 9 an.

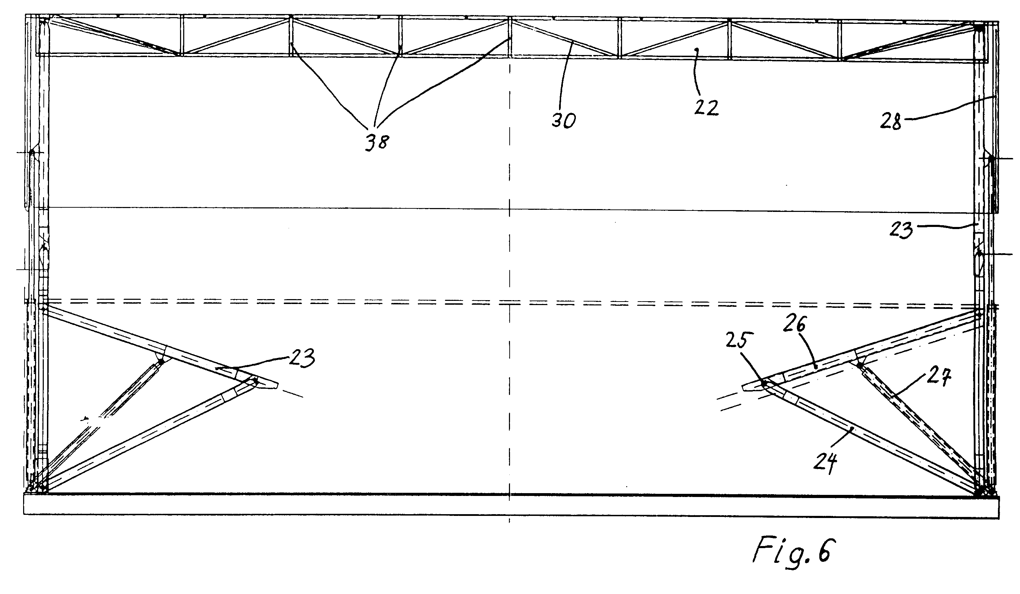

An den beiden Stirnseiten sind auf der Plattform 4 zwei einen Fachwerk-Balken 22 tragende Stützen 23 angeordnet. Sie bestehen jeweils aus einem Unterteil 24 und einem in einem Gelenk 25 mit ihm verbundenen Oberteil 26 sowie einem Hubzylinder 27, mittels dessen sie durch Einknicken über die Plattform 4 einfahrbar sind. Fig. 6 zeigt sowohl die für Transport und Ruhe eingefahrene Stellung als auch die für den Betrieb der Bühne ausgefahrene Stellung.

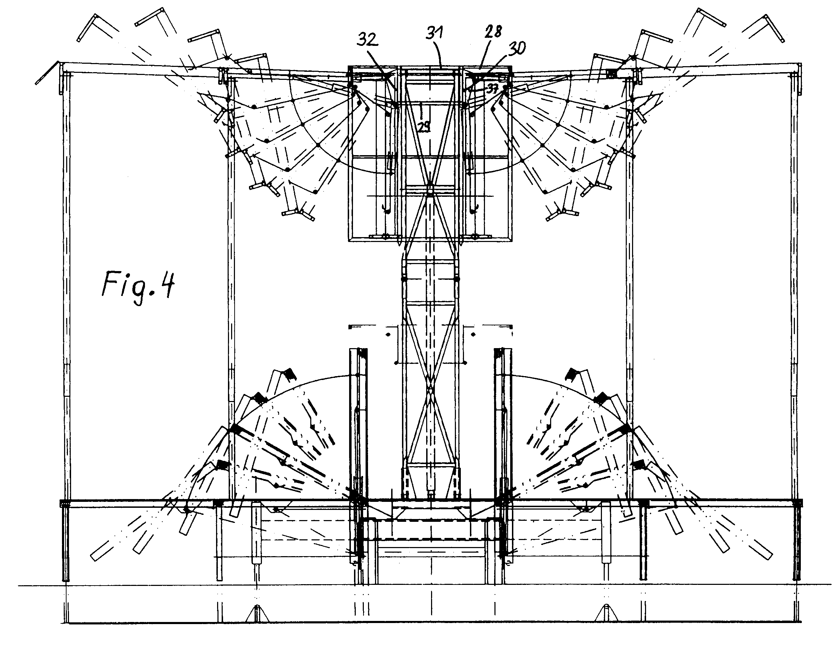

Zwei in der eingefahrenen Stellung über den Enden der Plattform sich erhebende Stirnwände 28, die in den Zeichnungen nur als Rahmen dargestellt sind, sind starr an den beiden Enden des Balkens 22 befestigt.
Der Balken 22 ist aus vier flächigen Fachwerken 29 bis 32 zu einem räumlichen Gebilde von einem aus Fig. 4 ersichtlichen rechteckigen Querschnitt zusammengesetzt.

Der Balken 22 trägt eine, wiederum in Form von zwei Knickflügeln 33 ausgebildete, Dachkonstruktion.

Das innere Flügelteil 34 und das äußere Flügelteil 35 bestehen hier aus leiterförmig zusammengesetzten Sparren 36, die permanent oder nach dem Aufbau der Bühne aufgelegt eine Plane tragen. Sie könnten auch mit Aluminiumblech o.ä. belegt sein.

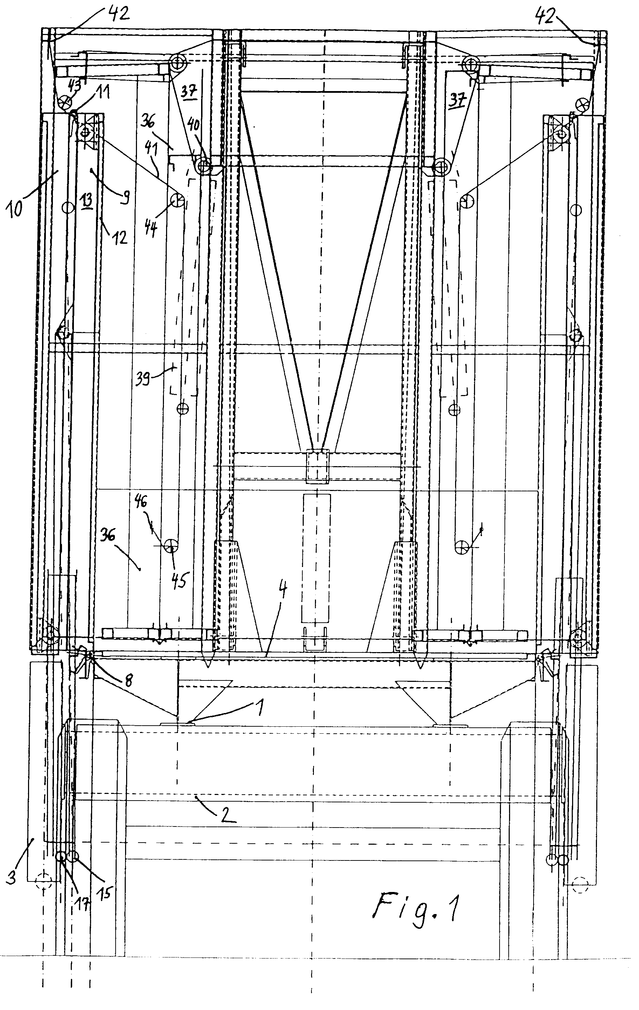

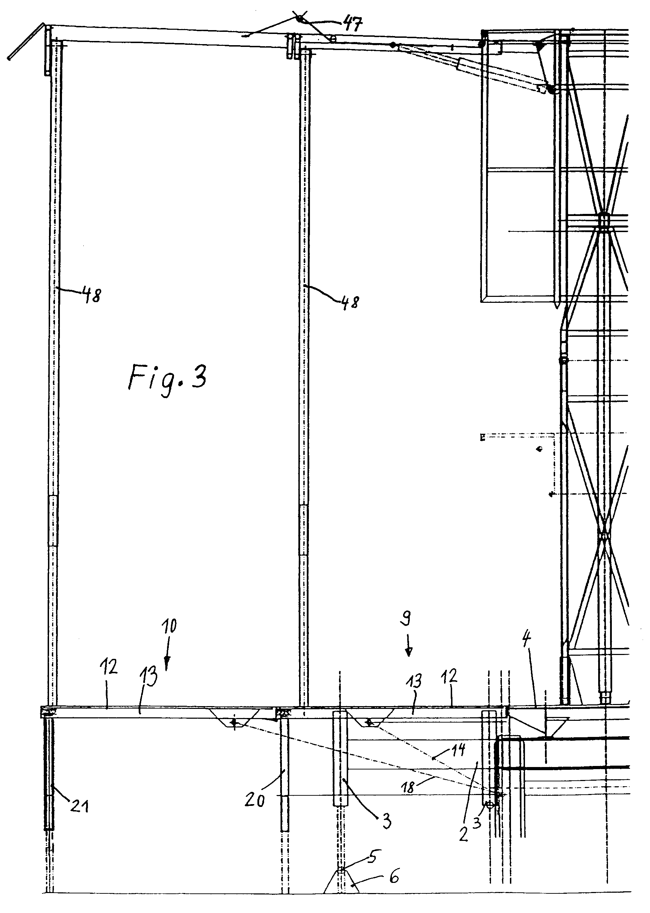

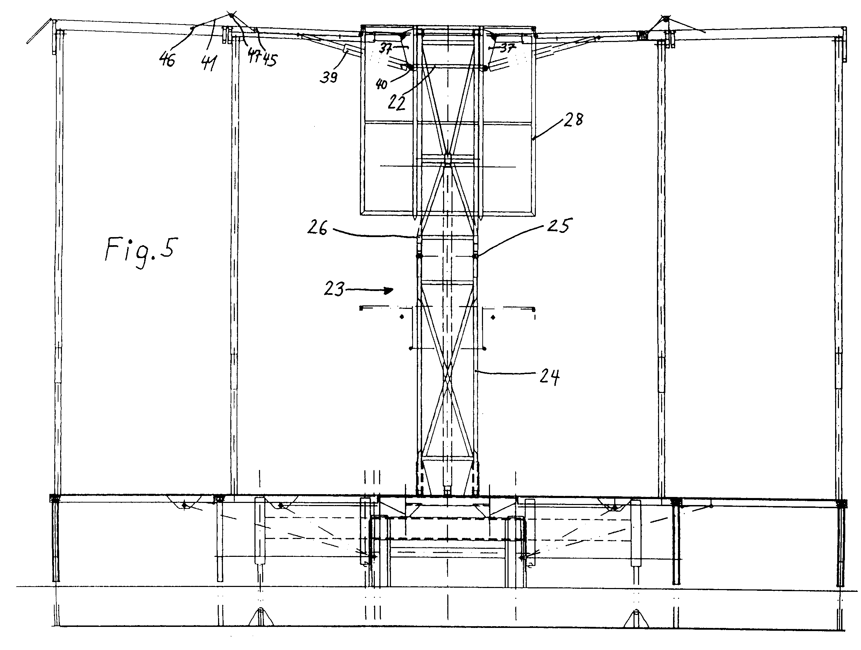

Die Sparren 36 des inneren Flügelteils 34 sind jeweils an Wangen 37 angelenkt, die an den senkrechten Stangen 38 der Fachwerke 30 und 32 des Balkens 22 angebracht sind. Zum Schwenken der Knickflügel 33 greifen bei 40 an dem Balken 22 angelenkte Arbeits-Zylinder 39 an Sparren 36 des inneren Flügelteils 34 an. Um die Knickflügel bei dem Schwenkvorgang auszubreiten bzw. zusammenzuklappen, sind an ihren Enden, neben den Stirnwänden 28, Seile 41 folgendermaßen angeordnet:
Von einem Befestigungspunkt 42 an der Stirnwand 28 oder einem anderen ausragenden Teil des Balkens 22 aus zieht sich das Seil 41 in der Stellung gemäß Fig. 1 über eine an der Stirnwand 28 angebrachte Fangrolle 43, eine an dem äußersten Sparren 36 des inneren Flügelteils 34 angeordnete Rolle 44 und eine weitere an dem Sparren 36 angeordnete Rolle 45 zu dem anderen Befestigungspunkt 46 an dem äußersten Sparren 36 des äußeren Flügelteils 35.
Werden die Knickflügel 7 an der Plattform 4, die die äußeren Flügelteile 35 der Dachkonstruktion mit nicht gezeichneten Anschlägen zurückhalten, ausgeschwenkt, so fallen die äußeren Flügelteile 35 etwas nach außen, bis sie durch weitere Straffung des Seiles 41 gehalten sind. Sie schwenken dann unter ihrem Eigengewicht weiter nach außen, wenn die inneren Flügelteile 34 mittels der Zylinder 39 ausgeschwenkt werden. Den Fortgang dieser Bewegungen zeigt Fig. 2. Das Seil 41 wird dabei immer weiter nachgelassen und läßt damit das äußere Flügelteil 35 immer weiter abschwenken infolge des Umstandes, daß zuerst durch das Abheben des Seiles 41 von der Fangrolle 43 die durch diese hervorgerufene Knickung des Seiles 41 begradigt wird und dann die Rolle 44 sich dem Befestigungspunkt 42 immer weiter nähert und damit der Gesamtverlauf des Seiles 41 weiter begradigt wird. Schließlich legt sich am Übergang von dem inneren Flügelteil 34 zu dem äußeren Flügelteil 35 das Seil 41 auf eine weitere Fangrolle 47, die in Fig. 2 bis 5 nur isoliert erscheint und an einer nicht gezeichneten Konsole des Sparrens des inneren Flügelteils 34 angeordnet ist, um das äußere Flügelteil mit der notwendigen Komponente nach oben halten zu können. Die Anordnungen der Rolle 44 und als ergänzende Maßnahme der Rolle 43 sind so getroffen, daß das Seil 41 den Knickflügel 33 in der Stellung gemäß Fig. 3 ausgebreitet hält und beim Übergang zu der Stellung gemäß Fig. 1 weit genug anzieht.

Endgültig in der ausgebreiteten Stellung gehalten werden die Knickflügel 33 dann durch von Hand gesetzte, teleskopische Stützen 48.

Mit Ausnahme an der Vorderseite kann die gesamte Bühne schließlich mit Planen umkleidet werden.

Die Seile 41 könnten, wenn auch teurer, durch zwischen dem inneren Flügelteil 34 und dem äußeren Flügelteil 35 angeordnete Arbeits-Zylinder ersetzt werden. Entsprechendes gilt für die Stangen 18.

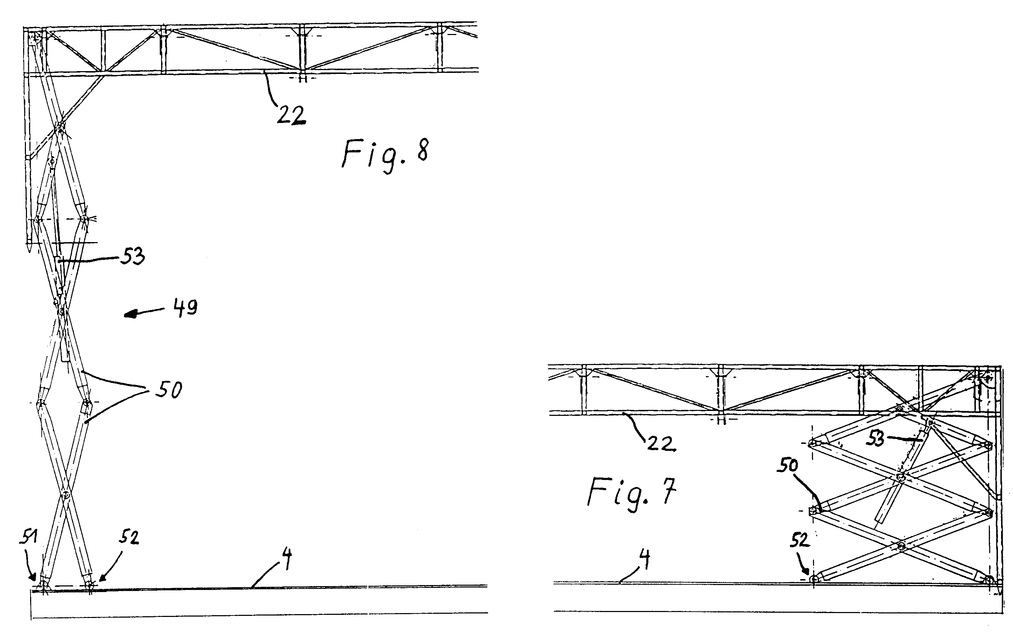

In Fig. 7 und 8 sind die beiden Stützen 23 durch eine Scherenkonstruktion 49 ersetzt.
Sie besteht jeweils aus zwei beiderseits des Fachwerkbalkens 22 an dessen Enden angelenkten mehrgliedrigen Scheren 50, wobei gleich angeordnete Schenkel der beiden Scheren 50 durch Querstangen starr verbunden sind. Die äußeren Fußpunkte 51 der Scheren 50 sind an der Plattform 4 angelenkt. Die inneren Fußpunkte 52 gleiten mit Rollen auf der Plattform 4; die Rollen könnten in Führungen gehalten sein. Ein zwischen aufeinanderfolgenden Scherengliedern wirksamer Hydraulikzylinder 53 zum Aus- und Einfahren der Scherenkonstruktion 49 erlaubt auch ein Festhalten in Zwischenstellungen und damit beliebig einstellbare Dachhöhen.

## Patentansprüche

1. Mobile Bühne,
gekennzeichnet durch eine fahrbare, rechteckige Plattform (4) mit an gegenüberliegenden Seitenrändern angelenkten, aus einer hochgeschwenkten, zusammengeklappten Stellung (Fig. 1) in eine waagerechte, ausgebreitete Stellung (Fig. 3) schwenkbaren Knickflügeln (7) und Stützen (20,21) jeweils für das innere (9) und für das äußere (10) Flügelteil.

2. Bühne nach Anspruch 1,
dadurch gekennzeichnet,
daß zum Schwenken der Knickflügel (7) an einem Grundrahmen unter der Plattformebene angelenkte Arbeits-Zylinder (14) gelenkig (16) jeweils an dem inneren Flügelteil (9) angreifen.

3. Bühne nach einem der Ansprüche 1 oder 2,
dadurch gekennzeichnet,
daß zum Ausbreiten und Zusammenklappen der Knickflügel (7) an dem Grundrahmen unter der Plattformebene (4) angelenkte Stangen (18) gelenkig an dem äußeren Flügelteil (10) angreifen, deren Länge und Befestigungspunkte (17;19) derart gewählt sind, daß das äußere Flügelteil (10) bei der hochgeschwenkten Stellung des Knickflügels (7) an dem inneren Flügelteil (9) anliegt und bei der ausgebreiteten Stellung mit ihm fluchtet.

4. Bühne nach Anspruch 2 oder 3,
dadurch gekennzeichnet,
daß die in der hochgeschwenkten, zusammengeklappten Stellung der Knickflügel (7) zwischen die Flügelteile (9;10) ragenden Abschnitte der Zylinder (14) bzw. Stangen (18) zwischen Versteifungsrippen (13) an der Unterseite der Flügelteile (9;10) Platz finden, vorzugsweise ferner die, vorzugsweise an den Flügelteilen (9;10) angelenkten, Stützen (20,21).

5. Bühne nach einem der Ansprüche 1 bis 4,
dadurch gekennzeichnet,
daß an den beiden anderen Seiten der Plattform (4) zwei einfahrbare, vorzugsweise in Scherenkonstruktion (49) ausgeführte, Stützen (23;49) angeordnet sind, die einen Balken (22), vorzugsweise aus Fachwerk, tragen, an dem eine Dachkonstruktion angeordnet ist mit zwei Knickflügeln (33), die aus einer herabgeschwenkten, zusammengeklappten Stellung (Fig. 1) in eine, vorzugsweise im wesentlichen waagerechte, ausgebreitete Stellung (Fig. 3) verschwenkbar sind und mit Stützen (48) jeweils für das innere (34) und das äußere (35) Flügelteil.

6. Bühne nach Anspruch 5,
dadurch gekennzeichnet,
daß zum Schwenken der Knickflügel (33) der Dachkonstruktion an dem Balken (22) angelenkte (40) Arbeits-Zylinder (39) gelenkig jeweils an dem inneren Flügelteil (34) angreifen.

7. Bühne nach Anspruch 5 oder 6,
dadurch gekennzeichnet,
daß zum Ausbreiten und Zusammenklappen der Knickflügel (33) der Dachkonstruktion einerseits an dem Balken (22) und andererseits an dem äußeren Flügelteil (35) befestigte Zugseile (41) über Rollen (44;45) an dem inneren Flügelteil (34) geführt sind derart, daß in der ausgebreiteten Stellung (Fig. 3) das Seil (41) langgestreckt ist, wobei es jedoch am Übergang von dem inneren (34) zu dem äußeren (35) Flügelteil durch eine am inneren Flügelteil (34) angeordnete Konsole nach oben herausgehoben ist, und beim Zusammenklappen durch die dem Befestigungspunkt (42) am Balken (22) nächste Umlenkrolle eingeknickt (44) wird und dadurch den Befestigungspunkt (46) am äußeren Flügelteil (35) anzieht.

8. Bühne nach einem der Ansprüche 1 bis 7,
dadurch gekennzeichnet,
daß die fahrbare Plattform (4) aus einem Sattelaufleger (1,4) besteht.

9. Bühne nach einem der Ansprüche 1 bis 8,
dadurch gekennzeichnet,
daß die Plattform (4) mittels hydraulischer Stützen (3) über ihre Transporthöhe anhebbar ist.
